(19) Europäisches Patentamt / European Patent Office / Office européen des brevets

(11) **EP 3 919 239 A1**

(12) **EUROPEAN PATENT APPLICATION**
published in accordance with Art. 153(4) EPC

(43) Date of publication:
**08.12.2021 Bulletin 2021/49**

(21) Application number: **19913263.0**

(22) Date of filing: **03.12.2019**

(51) Int Cl.:
**B25J 13/00** (2006.01)    **G06F 3/16** (2006.01)
**G10L 15/00** (2013.01)    **G10L 15/10** (2006.01)
**G10L 15/22** (2006.01)

(86) International application number:
**PCT/JP2019/047134**

(87) International publication number:
**WO 2020/158171 (06.08.2020 Gazette 2020/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.01.2019 JP 2019011796**

(71) Applicant: **Sony Group Corporation
108-0075 Tokyo (JP)**

(72) Inventors:
• **OGAWA, Hiroaki
Tokyo 108-0075 (JP)**
• **SEKIYA, Toshiyuki
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54)    **INFORMATION PROCESSOR FOR SELECTING RESPONDING AGENT**

(57)    To provide an information processing apparatus including: a selection unit that selects a response agent that responds to a user according to a response type on the basis of an utterance content of the user from a plurality of agents having different outputs with respect to an input; and a response control unit that controls a response content made by the response agent. Therefore, the agent can respond to the user's intention without an explicit command.

*FIG. 1*

**Description**

TECHNICAL FIELD

The present disclosure relates to an information processing apparatus, an information processing method, and a program.

BACKGROUND ART

Conventionally, various technologies have been developed for giving commands by voice to various home appliances such as television receivers or information devices such as personal computers.

For example, according to the technology described in Patent Document 1, a user gives a command to a virtual character in a dialogue manner, so that the device can be operated while communicating with the virtual character in a dialogue manner. As described above, according to the technology described in Patent Document 1, the user can cause an agent to execute various requests through the agent such as a virtual character as an example.

CITATION LIST

PATENT DOCUMENT

Patent Document 1: Japanese Patent Application Laid-Open No. 2002-41276

SUMMARY OF THE INVENTION

PROBLEMS TO BE SOLVED BY THE INVENTION

However, with the technology described in Patent Document 1, it is not possible to cause an agent that the user does not know to execute a request by talking including an appropriate command. Therefore, the user needs to know the type, role, and the like of each virtual character. In view of the circumstances described above, there is a need for a technology in which the agent responds to the user's intention without an explicit command.

SOLUTIONS TO PROBLEMS

According to the present disclosure, there is provided an information processing apparatus including: a selection unit that selects a response agent that responds to a user according to a response type on the basis of an utterance content of the user from a plurality of agents having different outputs with respect to an input; and a response control unit that controls a response content made by the response agent.

Furthermore, according to the present disclosure, there is provided an information processing method including, by a processor: selecting a response agent that responds to a user according to a response type on the basis of an utterance content of the user from a plurality of agents having different outputs with respect to an input; and controlling a response content made by the response agent.

Furthermore, according to the present disclosure, there is provided a program for causing a computer to function as: a selection unit that selects a response agent that responds to a user according to a response type on the basis of an utterance content of the user from a plurality of agents having different outputs with respect to an input; and a response control unit that controls a response content made by the response agent.

BRIEF DESCRIPTION OF DRAWINGS

Fig. 1 is a diagram for explaining a technical overview according to an embodiment of the present disclosure.
Fig. 2 is a block diagram showing a configuration of an information processing apparatus according to an embodiment of the present disclosure.
Fig. 3 is a schematic diagram for explaining an example of the operation of the information processing apparatus according to the embodiment.
Fig. 4 is an example in which a response agent is displayed by the operation of the information processing apparatus according to the embodiment.
Fig. 5 is a diagram showing an operation flow of the information processing apparatus according to the embodiment.

Fig. 6 is a diagram showing an example of a variation example of a display example of the response agent according to the embodiment.

Fig. 7 is a diagram showing an example of a variation example of a display example of the response agent according to the embodiment.

Fig. 8 is a block diagram showing an example of a variation example of a configuration of the information processing apparatus according to the embodiment.

Fig. 9 is a schematic diagram showing an example of a variation example of each agent according to the embodiment.

Fig. 10 is a schematic diagram showing an example of a variation example of control of the response agent according to the embodiment.

Fig. 11 is a schematic diagram showing an example of a variation example of control of the response agent according to the embodiment.

Fig. 12 is a diagram showing an example of a hardware configuration of the information processing apparatus according to the embodiment.

## MODE FOR CARRYING OUT THE INVENTION

A preferred embodiment of the present disclosure will be described in detail below with reference to the accompanying drawings. Note that, in the present specification and the drawings, configuration elements that have substantially the same function and configuration are denoted with the same reference numerals, and repeated description is omitted.

Note that the description is given in the order below.

1. Technical overview
2. Function and configuration
3. Operation flow
4. Variation examples
5. Hardware configuration example

(1. Technical overview)

First, an overview of an information processing apparatus that allows a user to give a command to an agent even when the user does not know the type of the agent will be described.

There is a case where an information processing apparatus having a plurality of agent functions recognizes an explicit command and the agent executes processing with respect to the command. For example, when the information processing apparatus or the like recognizes a command such as "Nanako, what's tomorrow's TV program?" as an explicit command, an agent called Nanako is selected, and tomorrow's TV program or the like is presented to the user.

However, in the method described above, the user needs to know that the agent called Nanako has a role of providing information such as a TV program, and it is a heavy burden on the user for the user to know various agents having various roles and give an instruction.

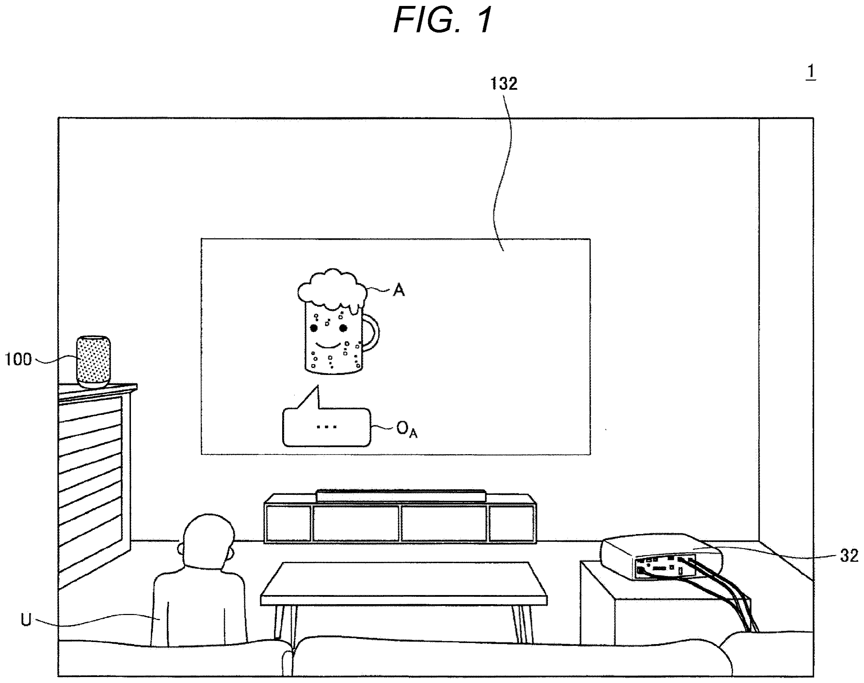

In the technology of the present disclosure, the agent can respond to the user's intention without an explicit command. Description will be given with reference to Fig. 1. Fig. 1 is a diagram schematically showing an overview of an information processing apparatus that allows the user to give a command to the agent.

A user U exists in a space 1. Moreover, the space 1 includes an information processing apparatus 100, a display apparatus 32, and a screen 132. In the technology of the present disclosure, on the basis of an utterance content uttered by the user U, the information processing apparatus 100 processes the utterance content and selects a response agent that responds to the utterance content of the user depending on a response type from a plurality of agents managed by the information processing apparatus 100. Moreover, the information processing apparatus 100 controls the display apparatus 32 and presents a first agent A, which is a response agent, and a response content OA to the user U via the screen 132. Therefore, an appropriate agent can respond to the user's intention without an explicit command from the user, and the convenience felt by the user can be increased.

(2. Function and configuration)

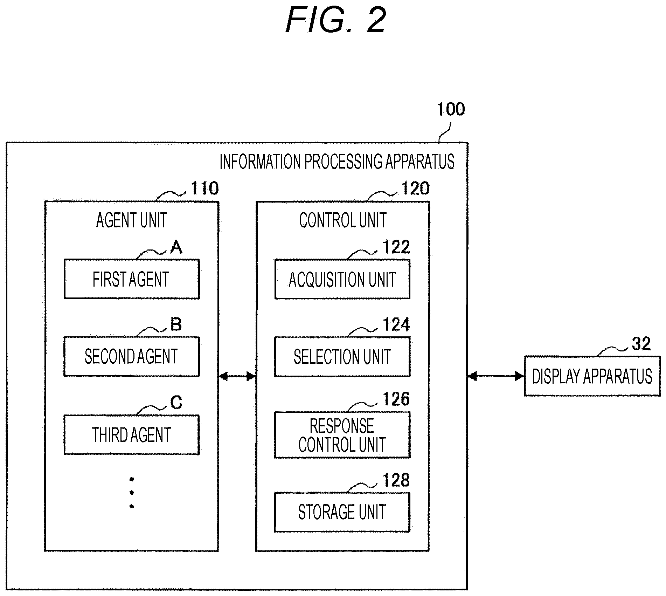

With reference to Fig. 2, the information processing apparatus 100 allowing the agent to respond to the user's intention without an explicit command will be described. In the present embodiment, a case where a plurality of agents is managed by the information processing apparatus 100 will be taken as an example. Fig. 2 is a block diagram showing the functions and configuration of the information processing apparatus 100 allowing the agent to respond to the user's intention.

The information processing apparatus 100 includes an agent unit 110 and a control unit 120. The information processing apparatus 100 has a function of selecting a response agent that responds to the user from a plurality of agents on the basis of the utterance content of the user depending on a response type, and controlling the response content. The agent has a role of performing various processing and performing operations on behalf of the user with respect to the user. Note that the response type indicates the type of response determined on the basis of the characteristics of each agent, the response content, or the like.

The agent unit 110 has a plurality of agents exemplified by the first agent A, a second agent B, and a third agent C. Each agent has a function of generating a response content with respect to the user's utterance content acquired via the control unit 120 as described later.

Each of the plurality of agents has a different output to the user with respect to the user's input, and generates each response content on the basis of the user's utterance content. For example, in a case where a natural language is input, the agent may output the response content in a natural language. The response content can be expressed in various forms such as a text format, an image format, a voice format, and an operation format.

Furthermore, the plurality of agents may be agents that present different personalities to the user, such as different character icons displayed on the screen 132 described later or different endings of the response contents.

Each of the plurality of agents may have a function of accessing resources on the network, if necessary. The resources on the network may be a weather information database for inquiring about weather forecast, a schedule database for inquiring about the schedule of the user, and the like.

Moreover, the plurality of agents can calculate an index used when a response agent as described later is selected. For example, the plurality of agents may calculate the goodness of fit with respect to the utterance content on the basis of the utterance content.

Note that, in the present embodiment, three agents are taken as an example, but the number of agents is not limited. Furthermore, each agent may acquire the utterance content of the user without using the control unit 120.

The control unit 120 includes an acquisition unit 122, a selection unit 124, a response control unit 126, and a storage unit 128. The control unit 120 has a function of outputting the utterance content of the user to the agent unit 110, selecting a response agent that gives an appropriate answer through the agent unit 110, and controlling the response content.

The acquisition unit 122 has a function of acquiring the utterance content of the user. The acquisition unit 122 acquires the utterance content of the user by collecting a voice using a microphone or the like. The acquisition unit 122 acquires the utterance contents of one or more users existing in a certain space. The acquisition unit 122 may acquire utterances during a dialogue between a plurality of users.

The acquisition unit 122 may further have a function of acquiring user information regarding the user. The user information includes attributes such as the age and gender of the user. The attributes are, for example, whether it is a child, an adult, a man, a woman, or the like. Such user information may be information input by the user or the like by an input apparatus, or may be information acquired via a sensor apparatus. Furthermore, it may be information inferred from the utterance content obtained by the acquisition unit 122. The input apparatus is an apparatus through which the user can input information, such as a mouse, a keyboard, a touch panel, a button, a microphone, a switch, and a lever. The sensor apparatus may be, for example, an illuminance sensor, a humidity sensor, a biological sensor, a position sensor, a gyro sensor, or the like. The sensor apparatus may be provided in a non-wearable type information processing apparatus, or may be provided in a wearable type information processing apparatus worn by the user.

Moreover, the user information may be user information acquired on the basis of the utterance history. For example, it may include the content that characterizes the user's preferences such as favorites, hobbies, and the like that are inferred from the utterance content. The user information may be information regarding the position where the user exists.

The user information may further include environment information regarding the environment around the user. The environment information may be information such as ambient brightness, time, and weather.

The acquisition unit 122 also has a function of acquiring the utterance content, user information, or the like described above, and outputting it to the storage unit 128.

The selection unit 124 has a function of selecting a response agent that gives an appropriate response from the plurality of agents described above. The appropriate response is the response selected according to the goodness of fit or the priority condition specified by the user. The goodness of fit is, for example, an index that makes it possible to compare the response contents generated by agents among the agents.

An example of the processing of the selection unit 124 in a case where the response agent is selected by using the goodness of fit will be described. In this case, the selection unit 124 selects the response agent according to the goodness of fit calculated from the utterance content.

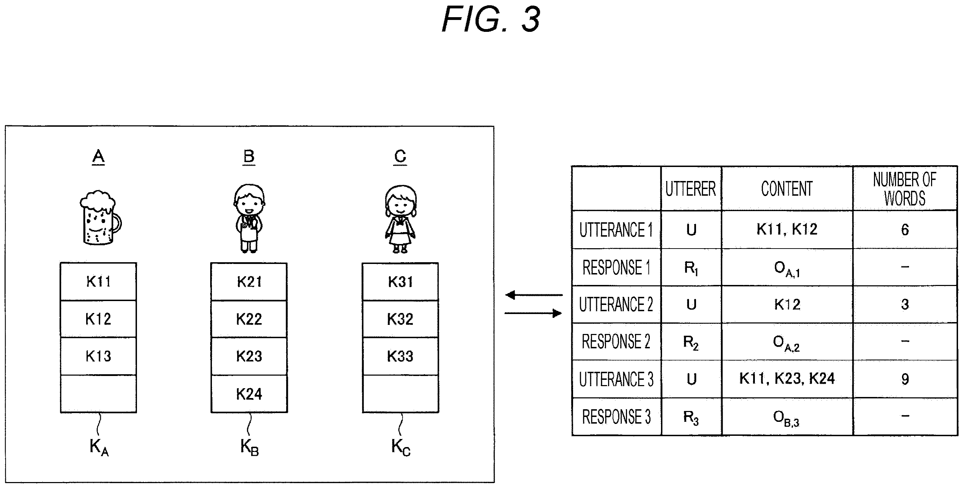

Detailed description will be given with reference to Fig. 3. Fig. 3 is a schematic diagram showing processing in which the response agent is selected on the basis of the utterance content. Fig. 3 shows the first agent A, the second agent B, and the third agent C that perform different outputs with respect to a user input. Each agent has a keyword database in which keywords according to the response contents that each agent can make are stored.

The first agent A has a keyword database KA, and the keyword database KA stores a keyword group including a keyword K11, a keyword K12, and a keyword K13. Similarly, the second agent B has a keyword database $K_B$, and the keyword database $K_B$ stores a keyword group including a keyword K21, a keyword K22, a keyword K23, and a keyword K24. The third agent C has a keyword database Kc, and the keyword database Kc stores a keyword group including a keyword K31, a keyword K32, and a keyword K33.

Each agent collates the keywords included in the utterance content with the keyword database owned by each agent to calculate the goodness of fit.

First, the user U first makes an utterance 1 including the keyword K11 and the keyword K12. Each agent A to C collates the respective keyword databases $K_A$ to $K_C$ with the keywords included in the content of the utterance 1. Each agent calculates the goodness of fit using the keyword databases $K_A$ to $K_C$ owned by each agent and the keywords included in the content of the utterance 1.

Each agent breaks down the sentence of the utterance content of the utterance 1 into words. The goodness of fit is calculated using the number of all words and the number of keywords. The utterance 1 includes six words and includes two keywords: the keywords K11 and K12 in the six words. Here, the keyword database KA of the first agent A includes the keywords K11 and K12 included in the utterance 1. On the other hand, the keyword databases $K_B$ and $K_C$ of the second agent B and the third agent C do not include the keyword K11 or K12.

Here, goodness of fit $Z_{i,t}$ of an agent i with respect to an utterance t of the user is expressed by the formula (1) described below.

[Math. 1]

$$Z_{i,t} = \frac{m_i(W_t)}{|W_t|} \quad \cdots (1)$$

Note that $W_t$ indicates the utterance content of the utterance t of the user, $|W_t|$ indicates the number of words included in the utterance content $W_t$, and $m_i(W_t)$ indicates the number of keywords, which are stored (registered) in the keyword database of the agent i, included in the utterance content $W_t$.

According to the above, the goodness of fit of the first agent A is calculated to be 2/6 (≒ 0.33), the goodness of fit of the second agent B is calculated to be 0/6 (= 0), and the goodness of fit of the third agent C is calculated to be 0/6 (= 0). The selection unit 124 selects the response agent according to the magnitude of the goodness of fit calculated in this way. Furthermore, the selection unit 124 can select an agent indicating a goodness of fit equal to or higher than a preset threshold value as a response agent.

Here, the selection unit 124 selects the agent having the highest goodness of fit as a response agent $R_1$. For the utterance 1 described above, the first agent A having the highest goodness of fit can be selected as the response agent $R_1$. The selected first agent A outputs a response 1 including a response content $O_{A,1}$ as the response agent $R_1$.

Next, the user U utters an utterance 2 including the keyword K12. The utterance 2 includes three words and includes one keyword: the keyword K12 in the three words. Here, the keyword database KA of the first agent A includes the keyword K12 included in an utterance 3. On the other hand, the keyword databases $K_B$ and $K_C$ of the second agent B and the third agent C do not include the keyword K12.

According to the above, the goodness of fit of the first agent A is calculated to be 1/3 (≒ 0.33), the goodness of fit of the second agent B is calculated to be 0/3 (= 0), and the goodness of fit of the third agent C is calculated to be 0/3 (= 0). For the utterance 2, the first agent A having the highest goodness of fit is selected as a response agent $R_2$. The selected first agent A outputs a response 2 including a response content $O_{A,2}$ as the response agent $R_2$.

Next, the user U utters an utterance 3 including the keywords K11, K23, and K24. The utterance 3 includes nine words and includes three keywords: the keywords K11, K23, and K24 in the nine words. Here, the keyword database KA of the first agent A includes the keyword K11 included in the utterance 3, and the keyword database $K_B$ of the second agent B includes the keywords K23 and K24. On the other hand, the keyword database Kc of the third agent C does not include the keyword K11, K23, or K24.

According to the above, the goodness of fit of the first agent A is calculated to be 1/9 (≒ 0.11), the goodness of fit of the second agent B is calculated to be 2/9 (= 0.22), and the goodness of fit of the third agent C is calculated to be 0/9 (= 0). For the utterance 3, the second agent B having the highest goodness of fit is selected as a response agent $R_3$. The selected second agent B outputs a response 3 including a response content $O_{B,3}$ as the response agent $R_3$. In this way, the selection unit 124 selects the response agent using the goodness of fit $Z_{i,t}$ calculated by each agent. Note that, in the present embodiment, an example in which one response agent is selected is shown, but the present embodiment is not limited to this example, and a plurality of agents may be selected as the response agent.

Moreover, the goodness of fit $Z_{i,t}$ described above may be calculated using weighting parameters that weight the goodness of fit. By using the weighting parameters, the goodness of fit can be weighted, and the response agent can be selected flexibly.

With the addition of the weighting parameters, the weighted goodness of fit can be expressed as in the formula (2) described below. Note that the formula (2) described below is a formula for calculating goodness of fit $Z_{i,t,\alpha}$ of the agent i weighted with respect to the utterance t.

[Math. 2]

$$Z_{i,t,\alpha} = \alpha Z_{i,t} + \frac{(1-\alpha)P_i}{\Sigma_k P_k} \quad \cdot \cdot \cdot (2)$$

Note that Pi is a weighting parameter (agent weight) for the agent i, and $\alpha$ is a weighting parameter (adjustment weight) that adjusts the relationship between the keyword-based goodness of fit and the agent weight Pi.

Using such formula (2), the weighted goodness of fit is calculated.

The agent weight $P_i$ may be, for example, a parameter based on the user information regarding the user. Specifically, the agent weight Pi may be a weight set on the basis of information regarding the result of recognition of the user's age, gender, utterance history, and user's face.

For example, when the user's age is used as the agent weight $P_i$, the agent corresponding to the user's age can be preferentially selected as the response agent. In a case where the user age is low, an agent that specializes in topics for children is selected.

Furthermore, when the utterance history is used as the agent weight Pi, the agent that is closer to the response demanded by the user is selected, for example, such that the agent frequently selected as the response agent is preferentially selected according to the user's past utterance history. Moreover, the user information may include the biological information of the user. The biological information includes the user's pulse, body temperature, and the like, and can be acquired, for example, by the user wearing a biological sensor. By using the biological information, the selection unit 124 can infer the degree of tension of the user and the like according to the pulse and the like, and can make a response that more suits the user's intention.

Furthermore, the agent weight $P_i$ may be a weight set on the basis of the environment information regarding the environment around the user. The environment information may be ambient brightness, time, weather, and the like. For example, when the environment information is used as the agent weight Pi, the response agent can be selected according to the weather and the like, and the display apparatus can present the response content that more suits the user's intention to the user.

The agent weight $P_i$ may be set on the basis of the evaluation regarding the past response contents of the agent i such as the reliability of the agent i. The evaluation regarding the past response contents of the agent i may be an evaluation input by the user or an evaluation input by another user. By setting the agent weight Pi on the basis of the evaluation, it is possible to increase the possibility that a more reliable agent i will be adopted.

Note that, in the present embodiment, an example in which the goodness of fit is calculated by each agent is shown, but the present embodiment is not limited to this example, and the control unit 120 may acquire the response content of each agent and calculate the goodness of fit from the acquired response contents.

Furthermore, for example, in a case where each agent has linguistic materials related to utterances stored in a database in the form of text or the like, each agent may calculate the similarity between the utterance content of the user U and each linguistic material, and the selection unit 124 may compare the similarities (e.g., by using a known technology described in Japanese Patent Application Laid-Open No. 06-176064) and select the response agent.

The response control unit 126 has a function of controlling the response content when the response agent selected by the selection unit 124 responds to the user. The response control unit 126 controls the response content generated by the response agent according to the form of the display apparatus 32 and the like.

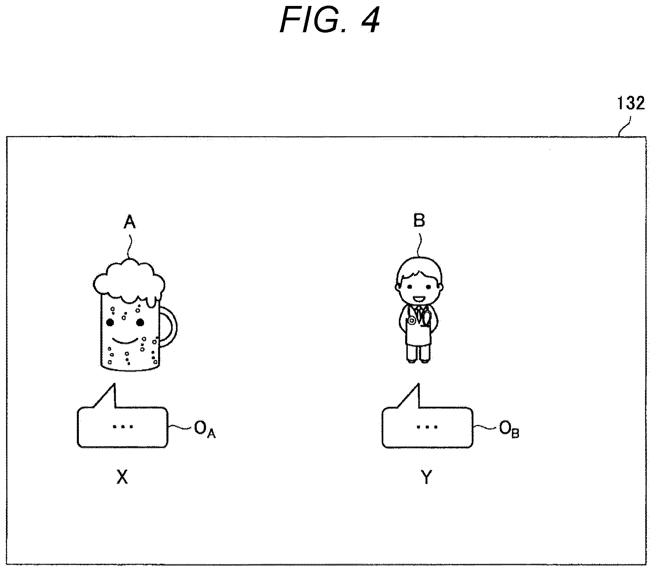

An example in which the response content is presented by the screen 132 will be described as an example with reference to Fig. 4. Fig. 4 is an example showing the response agents and the response contents displayed on the screen 132.

The first agent A and the second agent B selected as the response agents are displayed on the screen 132, and the response content OA is displayed to be uttered from the first agent A and a response content OB is displayed to be uttered from the second agent B. As described above, the screen 132 may display a plurality of selected response agents, or may display a single selected response agent.

The response control unit 126 may control the position or size of the displayed response agent according to the user information. For example, when the attribute of the utterer is a child, the response control unit 126 may control the position of the response agent according to the line of sight or position of the child.

Moreover, the response control unit 126 may display and control detail displays X and Y of the response agents. The detail displays X and Y may display the evaluation regarding the past response contents of the response agent, such as the reliability of the response agent. The evaluation may be an evaluation input and obtained by the user, or an evaluation input and obtained by another user. When these detail displays X and Y are displayed, the user can receive additional information in addition to the response content of the response agent.

The storage unit 128 has a function of storing various information and various parameters for the control unit 120 to realize various functions. Furthermore, the storage unit 128 also has a function of storing the past utterance contents. The past utterance content includes, for example, the dialogue history between the user and the response agent. By using the dialogue history, the selection unit 124 can select the response agent in consideration of the relationship between the past user and the response agent, and the like. Specifically, the selection unit 124 may use the number of times of selection as the response agent regarding the relationship with the user. For example, the selection unit 124 may select the agent whose number of times of selection as the response agent is the largest as the next response agent.

The display apparatus 32 includes an apparatus capable of visually presenting the response content controlled by the response control unit 126 to the user. Examples of such apparatus include display apparatuses such as a cathode ray tube (CRT) display apparatus, a liquid crystal display apparatus, a plasma display apparatus, an electroluminescence (EL) display apparatus, a laser projector, a light emitting diode (LED) projector, and a lamp.

Note that the response content can be presented by those other than the display apparatus. For example, in the case of a voice output apparatus, it includes an apparatus capable of presenting the response content controlled by the response control unit 126 to the user by voice. For example, the voice output apparatus includes a speaker having a plurality of channels capable of localizing a sound image such as a stereo speaker. Therefore, the user can determine which agent has been selected from the direction in which the voice is heard by allocating the agents in each direction in which the voice is localized.

In the case of an operation apparatus, it includes an apparatus capable of presenting the response content controlled by the response control unit 126 to the user by operation. For example, the operation apparatus may be a movable apparatus or an apparatus capable of gripping an object. Specifically, an operation apparatus 36 may be a robot or the like.

(3. Operation flow)

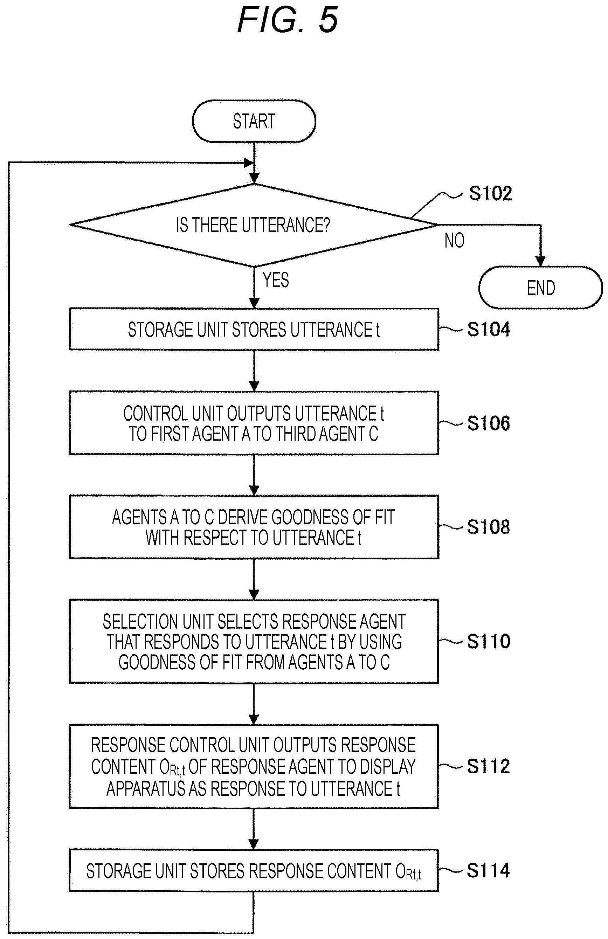

The functions and configurations of the information processing apparatus 100 have been described above. In this section, the operation flow according to each function and configuration will be described. Fig. 5 is a diagram showing an operation flow of the information processing apparatus 100.

First, the information processing apparatus 100 constantly acquires surrounding voices, and the information processing apparatus 100 determines whether or not there is a user utterance (S102). In a case where there is no user utterance (S102/No), the operation ends. On the other hand, in a case where there is a user utterance (S102/Yes), the processing proceeds to the next operation.

Next, the storage unit 128 stores the utterance t (S104).

Next, the control unit 120 outputs the utterance t to the first agent A to the third agent C (S106).

Next, the first agent A to the third agent C derive goodness of fit $Z_{A,t}$, $Z_{B,t}$, $Z_{C,t}$ with respect to the utterance content on the basis of the utterance content (S108).

Next, the selection unit 124 selects a response agent that responds to the utterance t from the first agent A to the third agent C by using the goodness of fit $Z_{A,t}$, $Z_{B,t}$, $Z_{C,t}$ (S110).

Next, the response control unit 126 outputs a response content $O_{Rt,t}$ of a response agent $R_t$ to the display apparatus 32 (S112).

Finally, the storage unit 128 stores the response content $O_{Rt,t}$ (S114).

The operation flow of the information processing apparatus 100 has been described above. By operating the information processing apparatus 100 in this way, a response by the response agent that suits the user's intention can be made even when the user does not give an explicit instruction.

(4. Variation examples)

Variation examples of the embodiment described above will be described below.

(Variation Example 1)

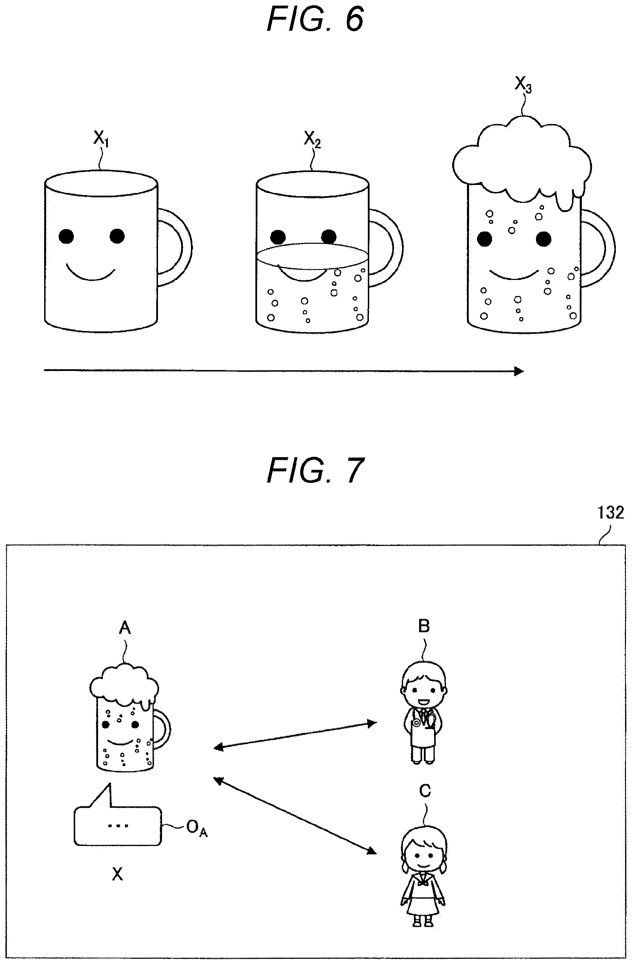

In the embodiment described above, an example in which the detail displays X and Y of the response agents are displayed on the screen 132 has been described. As a variation example of the embodiment described above, in a case where the detail displays X and Y are reliability, the reliability may be displayed by changes in the form of the icon as shown in Fig. 6. When the first agent A is an icon imitating a beer glass, the reliability may be indicated by changes in the content in the beer glass. Fig. 6 shows, from the left, an empty beer glass $X_1$, a half-filled beer glass $X_2$, and a

full beer glass $X_3$, and the reliability may increase in the order from the empty glass $X_1$ to the full glass $X_3$.

(Variation Example 2)

In Variation Example 1, an example of displaying the reliability and the like by changing the icons of the first agent A to the third agent C has been described. As a further variation example of Variation Example 1, an example of the variation example in a case where a response is made by the voice output apparatus will be described.
In a case where a response is presented by the voice output apparatus, the reliability (presence or absence of confidence) of the response agent may be presented by the utterance speed. Specifically, a slower utterance speed may indicate the absence of confidence in the response content, and a faster utterance speed may indicate the presence of confidence in the response content. Furthermore, the reliability of the response agent may be presented by a change in voice tone, accent, and the like of the voice. The change in accent includes a change in the ending of the response content.

(Variation Example 3)

In the embodiment described above, a state in which the response agent is selected and each response agent responds on the screen 132 has been described. As a variation example of the embodiment described above, one representative response agent of the selected response agents may respond to the user to make a response on behalf of the other selected response agents. As shown in Fig. 7, in a case where the selected response agents are the first agent A, the second agent B, and the third agent C, the first agent A may be a representative agent and the response content OA of the first agent A may be presented to the user on behalf of the second agent B and the third agent C. For example, the first agent A may output the response content $O_A$ indicating that "the second agent B says '$O_B$' and the third agent C says '$O_C$'".

(Variation Example 4)

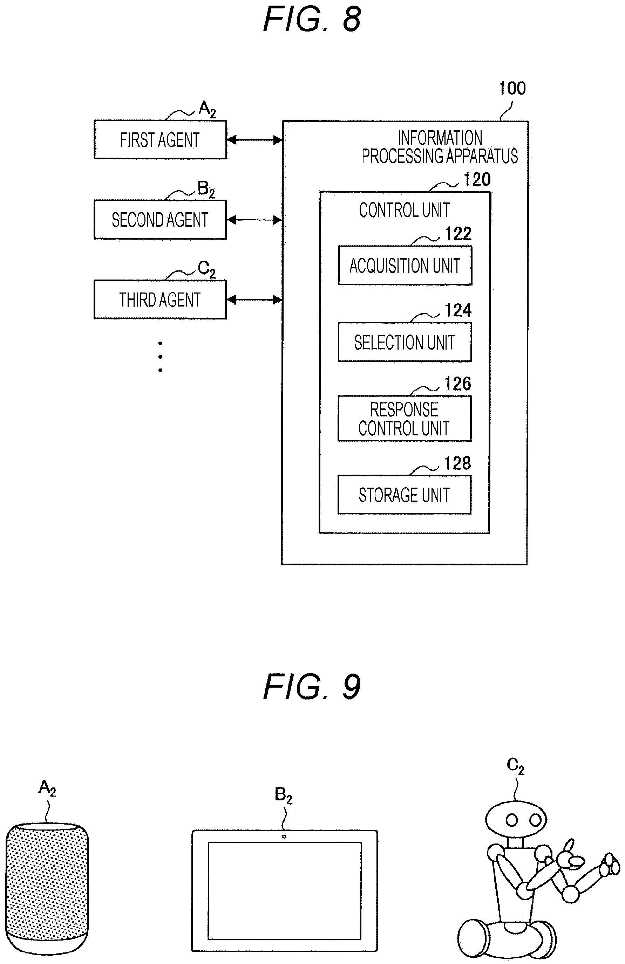

In the embodiment described above, an example in which a plurality of agents is managed in the information processing apparatus 100 has been described. As a variation example of the embodiment described above, the plurality of agents may be managed by an apparatus different from the information processing apparatus 100. As shown in Fig. 8, the information processing apparatus 100 includes the control unit 120. Furthermore, first agent $A_2$, second agent $B_2$, and third agent $C_2$ terminals different from the information processing apparatus 100 are provided.
Each of the first agent $A_2$, the second agent $B_2$, and the third agent $C_2$ may be, for example, each terminal as shown in Fig. 9. Specifically, Fig. 9 shows a state in which the first agent $A_2$ is a smart speaker, the second agent $B_2$ is a tablet terminal, and the third agent $C_2$ is a robot. In this way, the plurality of agents may be agents managed by terminals different from the information processing apparatus 100.
In a case where a plurality of agents is managed by terminals different from the information processing apparatus 100 as described above, the utterance content of the user is output to the first agent $A_2$, the second agent $B_2$, and the third agent $C_2$ from, for example, the control unit 120 of the information processing apparatus 100. The first agent $A_2$, the second agent $B_2$, and the third agent $C_2$ each generate a response content on the basis of the utterance content. Then, the first agent $A_2$, the second agent $B_2$, and the third agent $C_2$ output the response contents to the information processing apparatus 100.
In the information processing apparatus 100, the goodness of fit with respect to the response content may be calculated by the selection unit 124. Similar to the calculation of the goodness of fit by each agent as described in the embodiment described above, the response content of each agent may be acquired and the selection unit 124 may calculate the goodness of fit with respect to the response content.

(Variation Example 5)

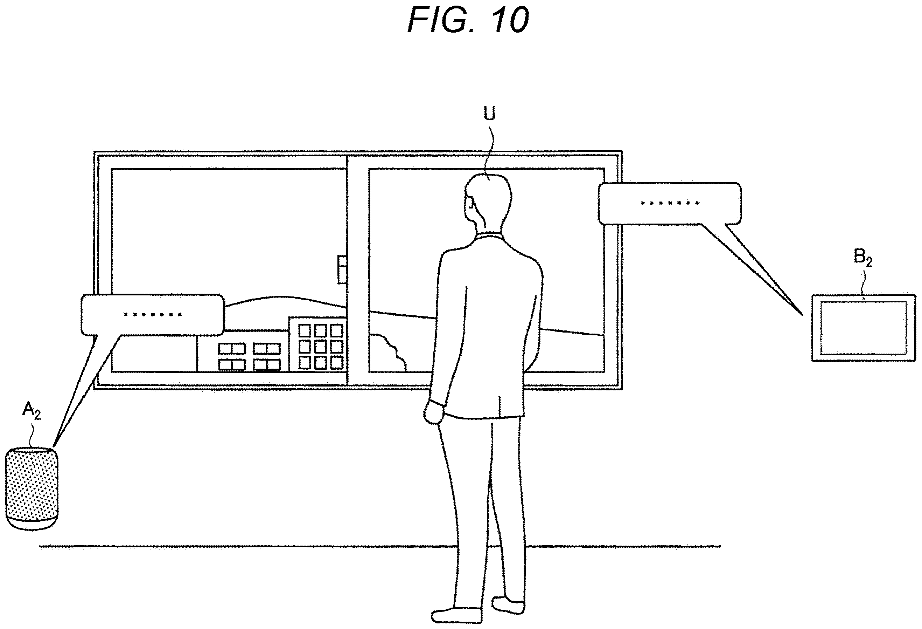

In the embodiment described above, an example in which the response agent and the response content are displayed on the screen 132 has been described. As a variation example of the embodiment described above, the response content may be output by voice. As shown in Fig. 10, the first agent $A_2$ exists on the left side of the user U, and the second agent $B_2$ exists on the right side of the user U. By outputting the voices from different directions, in the present variation example, the user U can know the direction in which the voice is output together with the response content.

(Variation Example 6)

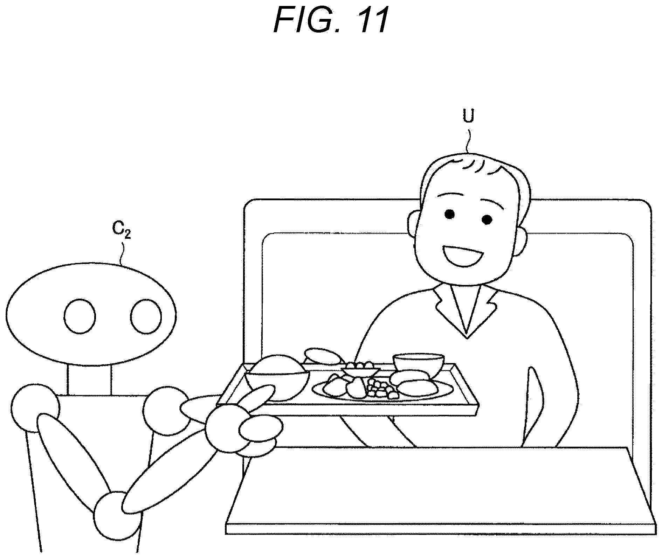

In the embodiment described above, an example in which the response agent and the response content are displayed on the screen 132 has been described. As a variation example of the embodiment described above, the response may be controlled by expressing the operation by the operation apparatus. As shown in Fig. 11, the third agent C2 is serving a meal to the user U. The response control unit 126 may indicate the response content of the agent to the user by controlling the operation apparatus exemplified by the robot.

(Variation Example 7)

In the embodiment described above, an example in which a response agent is selected in consideration of the user information and the like on the basis of the goodness of fit and the weighting parameters has been described. As a variation example of the embodiment described above, the response agent may be selected on the basis of a measure different from the goodness of fit and the weighting parameters. For example, parameters that determine the utility value of an advertisement, as described in Japanese Patent Application Laid-Open No. 2011-527798, may be used as a different measure.

(Variation Example 8)

In the embodiment described above, an example in which the control unit 120 outputs the utterance content of the user to all of the plurality of agents has been described. As a variation example of the embodiment described above, the control unit 120 may output the utterance content of the user to some agents of the plurality of agents. By selecting some agents in this way and outputting the utterance content, the processing speed can be increased. For example, an agent that can output the response content regarding the inside of the range of a predetermined distance from the user's position may be selected by using the user's position information.

(5. Hardware configuration example)

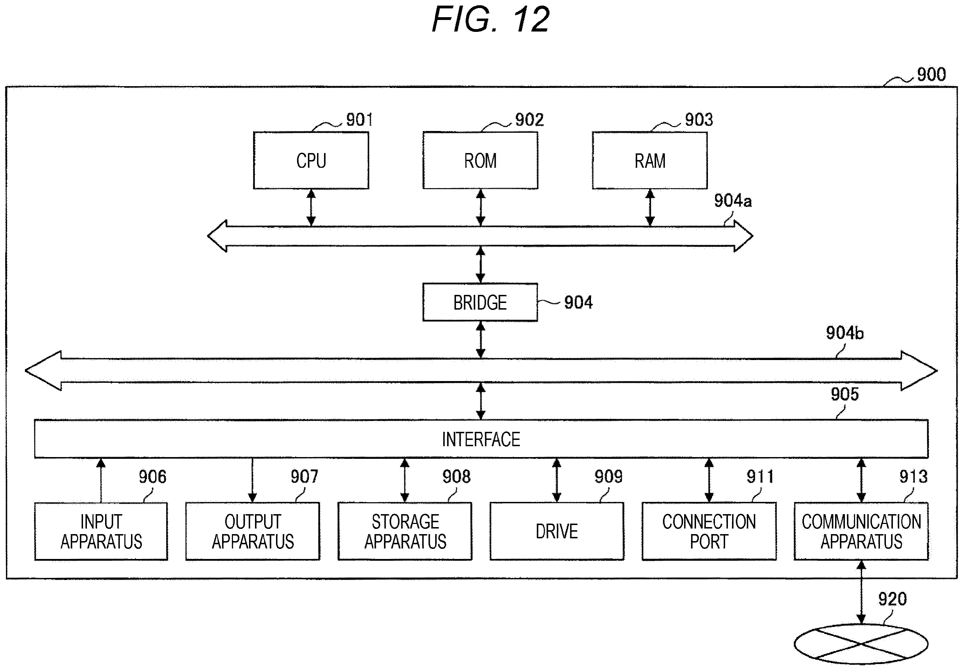

An example of a hardware configuration of the information processing apparatus according to the present embodiment is described with reference to Fig. 12. Fig. 12 is a block diagram showing an example of the hardware configuration of the information processing apparatus according to the present embodiment.

As shown in Fig. 12, an information processing apparatus 900 includes a central processing unit (CPU) 901, a read only memory (ROM) 902, a random access memory (RAM) 903, and a host bus 904a. Furthermore, the information processing apparatus 900 includes a bridge 904, an external bus 904b, an interface 905, an input apparatus 906, a display apparatus 907, a storage apparatus 908, a drive 909, a connection port 911, and a communication apparatus 913. The information processing apparatus 900 may include a processing circuit such as an electric circuit, a DSP or an ASIC instead of the CPU 901 or along therewith.

The CPU 901 functions as an arithmetic processing apparatus and a control apparatus and controls general operations in the information processing apparatus 900 according to various programs. Furthermore, the CPU 901 may be a microprocessor. The ROM 902 stores a program, an arithmetic parameter, or the like the CPU 901 uses. The RAM 903 temporarily stores a program used in execution of the CPU 901, a parameter that properly changes in the execution, or the like. The CPU 901 can form, for example, the control unit shown in Fig. 2.

The CPU 901, the ROM 902, and the RAM 903 are connected to one another by the host bus 904a including a CPU bus and the like. The host bus 904a is connected to the external bus 904b, e.g., a peripheral component interconnect/interface (PCI) bus via the bridge 904. Note that it is not necessarily needed to separately configure the host bus 904a, the bridge 904, and the external bus 904b, and these functions may be mounted on a single bus.

The input apparatus 906 is achieved by an apparatus through which a user inputs information, such as a mouse, a keyboard, a touch panel, a button, a microphone, a switch, and a lever. Furthermore, the input apparatus 906 may be, for example, a remote control apparatus using infrared ray or other electric waves or external connection equipment such as a cellular phone or a PDA supporting manipulation of the information processing apparatus 900. Moreover, the input apparatus 906 may include, for example, an input control circuit or the like which generates an input signal on the basis of information input by the user using the input means described above and outputs the input signal to the CPU 901. The user of the information processing apparatus 900 may input various types of data or give an instruction of processing operation with respect to the information processing apparatus 900 by manipulating the input apparatus 906.

The display apparatus 907 is formed by an apparatus that can visually or aurally notify the user of acquired information. As such apparatuses, there is a display apparatus such as a CRT display apparatus, a liquid crystal display apparatus, a plasma display apparatus, an EL display apparatus, a laser projector, an LED projector, or a lamp, a voice output apparatus such as a speaker and a headphone, and the like. The display apparatus 907 outputs, for example, results acquired according to various processing performed by the information processing apparatus 900. Specifically, the display apparatus 907 visually displays results acquired through various processing performed by the information processing apparatus 900 in various forms such as text, images, tables and graphs. On the other hand, in a case where the voice output apparatus is used, audio signals including reproduced voice data, acoustic data and the like are converted into analog signals and the analog signals are aurally output. The display apparatus 907 is, for example, the display apparatus 32 shown in Fig. 2.

The storage apparatus 908 is an apparatus for data storage, formed as an example of the storage unit of the information processing apparatus 900. For example, the storage apparatus 908 is achieved by a magnetic storage device such as an HDD, a semiconductor storage device, an optical storage device, a magneto-optical storage device, or the like. The storage apparatus 908 may include a storage medium, a record apparatus that records data on the storage medium, a read apparatus that reads data from the storage medium, a removal apparatus that removes data recorded on the storage medium, or the like. The storage apparatus 908 stores programs and various types of data executed by the CPU 901, various types of data acquired from the outside, and the like. The storage apparatus 908 stores, for example, various parameters and the like used when the response control unit controls the display apparatus in the control unit 120 shown in Fig. 2.

The drive 909 is a storage medium reader/writer, and is mounted on the information processing apparatus 900 internally or externally. The drive 909 reads information recorded on a removable storage medium, e.g., a magnetic disk, an optical disk, a magneto-optical disk, or a semiconductor memory, which is mounted, and outputs the information to the RAM 903. Furthermore, the drive 909 can write information onto the removable storage medium.

The connection port 911 is an interface connected with external equipment and is a connector to the external equipment through which data can be transmitted, for example, through a universal serial bus (USB) and the like.

The communication apparatus 913 is, for example, a communication interface including a communication device or the like for connection to a network 920. The communication apparatus 913 is, for example, a communication card or the like for a wired or wireless local area network (LAN), long term evolution (LTE), Bluetooth (registered trademark) or wireless USB (WUSB). Furthermore, the communication apparatus 913 may be a router for optical communication, a router for asymmetric digital subscriber line (ADSL), various communication modems, or the like. For example, the communication apparatus 913 can transmit and receive signals and the like to/from the Internet and other communication equipment according to a predetermined protocol, for example, TCP/IP or the like. By the communication apparatus 913, for example, the control unit 120 and the display apparatus, which is a user presentation apparatus, shown in Fig. 2 transmit and receive various information. An apparatus such as the communication apparatus 913 may be used for this transmission and reception.

Note that the network 920 is a wired or wireless transmission path of information transmitted from apparatuses connected to the network 920. For example, the network 920 may include a public network, e.g., the Internet, a telephone network, or a satellite communication network, or various local area networks (LAN) including Ethernet (registered trademark), wide area networks (WAN), or the like. Furthermore, the network 920 may include a dedicated network, e.g., an internet protocol-virtual private network (IP-VPN).

Furthermore, in the information processing apparatus 900, a computer program for causing the hardware such as the CPU, the ROM, and the RAM incorporated in the information processing apparatus 900 to exhibit the functions equivalent to those of the configurations of the information processing apparatus 100 according to the above-described embodiment can also be created. Furthermore, a recording medium in which the computer program is stored may falls within the scope of the technology according to the present disclosure.

The preferred embodiment of the present disclosure has been described above with reference to the accompanying drawings, while the technical scope of the present disclosure is not limited to the above examples. It is apparent that a person having normal knowledge in the technical field of the present disclosure may find various alterations and modifications within the scope of the technical idea stated in the claims, and it should be understood that they will naturally come under the technical scope of the present disclosure.

Furthermore, the effects described in the present specification are merely illustrative or exemplified effects, and are not limitative. That is, with or in the place of the above effects, the technology according to the present disclosure may achieve other effects that are clear to those skilled in the art from the description of the present specification.

Note that the configuration below also falls within the technical scope of the present disclosure.

(1)
An information processing apparatus including:

a selection unit that selects a response agent that responds to a user according to a response type on the basis of an utterance content of the user from a plurality of agents having different outputs with respect to an input; and
a response control unit that controls a response content made by the response agent.

(2)

The information processing apparatus according to (1), in which the selection unit selects the response agent according to goodness of fit calculated from the utterance content.

(3)

The information processing apparatus according to (2), in which the selection unit selects an agent with the goodness of fit indicated to be equal to or higher than a threshold value from the plurality of agents as the response agent.

(4)

The information processing apparatus according to (2) or (3), in which each of the plurality of agents calculates the goodness of fit.

(5)

The information processing apparatus according to any one of (2) to (4), in which the goodness of fit is calculated by using the utterance content of the user and a character string registered in a dictionary owned by each of the plurality of agents.

(6)

The information processing apparatus according to any one of (2) to (5), in which the goodness of fit is weighted by using a weighting parameter.

(7)

The information processing apparatus according to (6), in which the weighting parameter is a parameter based on user information regarding the user.

(8)

The information processing apparatus according to (7), in which the user information includes information regarding at least one of age or utterance history of the user.

(9)

The information processing apparatus according to (7) or (8), in which the user information includes environment information regarding environment around the user.

(10)

The information processing apparatus according to any one of (1) to (9), in which the selection unit selects the response agent further on the basis of a dialogue history between the user and an agent of the response.

(11)

The information processing apparatus according to any one of (1) to (10), in which the response control unit controls a display apparatus that presents the response content to the user by displaying the response content.

(12)

The information processing apparatus according to (11), in which the response control unit further controls display of detailed information of the plurality of agents.

(13)

The information processing apparatus according to any one of (1) to (10), in which the response control unit controls an operation apparatus that presents the response content to the user by mechanical operation.

(14)

The information processing apparatus according to any one of (1) to (10), in which the response control unit controls a voice output apparatus that presents the response content to the user by outputting the response content by voice.

(15)

The information processing apparatus according to any one of (1) to (14), in which the plurality of agents is managed in the information processing apparatus.

(16)

The information processing apparatus according to (2), in which the selection unit selects the response agent using a different measure in addition to the goodness of fit.

(17)

An information processing method including, by a processor:

selecting a response agent that responds to a user according to a response type on the basis of an utterance content of the user from a plurality of agents having different outputs with respect to an input; and controlling a response content made by the response agent.

(18)

A program for causing a computer to function as:

a selection unit that selects a response agent that responds to a user according to a response type on the basis of an utterance content of the user from a plurality of agents having different outputs with respect to an input; and

a response control unit that controls a response content made by the response agent.

REFERENCE SIGNS LIST

| 100 | Information processing apparatus |
| 110 | Agent unit |
| 120 | Control unit |
| 122 | Acquisition unit |
| 124 | Selection unit |
| 126 | Response control unit |
| 128 | Storage unit |

**Claims**

1. An information processing apparatus comprising:

   a selection unit that selects a response agent that responds to a user according to a response type on a basis of an utterance content of the user from a plurality of agents having different outputs with respect to an input; and
   a response control unit that controls a response content made by the response agent.

2. The information processing apparatus according to claim 1, wherein the selection unit selects the response agent according to goodness of fit calculated from the utterance content.

3. The information processing apparatus according to claim 2, wherein the selection unit selects an agent with the goodness of fit indicated to be equal to or higher than a threshold value from the plurality of agents as the response agent.

4. The information processing apparatus according to claim 2, wherein each of the plurality of agents calculates the goodness of fit.

5. The information processing apparatus according to claim 2, wherein the goodness of fit is calculated by using the utterance content of the user and a character string registered in a dictionary owned by each of the plurality of agents.

6. The information processing apparatus according to claim 5, wherein the goodness of fit is weighted by using a weighting parameter.

7. The information processing apparatus according to claim 6, wherein the weighting parameter is a parameter based on user information regarding the user.

8. The information processing apparatus according to claim 7, wherein the user information includes information regarding at least one of age or utterance history of the user.

9. The information processing apparatus according to claim 7, wherein the user information includes environment information regarding environment around the user.

10. The information processing apparatus according to claim 1, wherein the selection unit selects the response agent further on a basis of a dialogue history between the user and an agent of the response.

11. The information processing apparatus according to claim 1, wherein the response control unit controls a display apparatus that presents the response content to the user by displaying the response content.

12. The information processing apparatus according to claim 11, wherein the response control unit further controls display of detailed information of the plurality of agents.

13. The information processing apparatus according to claim 1, wherein the response control unit controls an operation apparatus that presents the response content to the user by mechanical operation.

14. The information processing apparatus according to claim 1, wherein the response control unit controls a voice output apparatus that presents the response content to the user by outputting the response content by voice.

15. The information processing apparatus according to claim 1, wherein the plurality of agents is managed in the information processing apparatus.

16. The information processing apparatus according to claim 2, wherein the selection unit selects the response agent using a different measure in addition to the goodness of fit.

17. An information processing method comprising, by a processor:

selecting a response agent that responds to a user according to a response type on a basis of an utterance content of the user from a plurality of agents having different outputs with respect to an input; and controlling a response content made by the response agent.

18. A program for causing a computer to function as:

a selection unit that selects a response agent that responds to a user according to a response type on a basis of an utterance content of the user from a plurality of agents having different outputs with respect to an input; and a response control unit that controls a response content made by the response agent.

*FIG. 1*

# FIG. 2

INFORMATION PROCESSING APPARATUS — 100

AGENT UNIT — 110

FIRST AGENT — A

SECOND AGENT — B

THIRD AGENT — C

CONTROL UNIT — 120

ACQUISITION UNIT — 122

SELECTION UNIT — 124

RESPONSE CONTROL UNIT — 126

STORAGE UNIT — 128

DISPLAY APPARATUS — 32

# FIG. 3

| | UTTERER | CONTENT | NUMBER OF WORDS |
|---|---|---|---|
| UTTERANCE 1 | U | K11, K12 | 6 |
| RESPONSE 1 | $R_1$ | $O_{A,1}$ | – |
| UTTERANCE 2 | U | K12 | 3 |
| RESPONSE 2 | $R_2$ | $O_{A,2}$ | – |
| UTTERANCE 3 | U | K11, K23, K24 | 9 |
| RESPONSE 3 | $R_3$ | $O_{B,3}$ | – |

EP 3 919 239 A1

# FIG. 4

# FIG. 5

```
                    ┌─────────┐
                    │  START  │
                    └────┬────┘
                         │
          ┌──────────────▼──────────────┐           S102
          ◇      IS THERE UTTERANCE?     ◇──────────
          └──────────────┬──────────────┘    NO
                         │                         │
                        YES                   ┌────▼────┐
                         │                    │   END   │
   ┌─────────────────────▼─────────────────┐  └─────────┘
   │  STORAGE UNIT STORES UTTERANCE t       │── S104
   └─────────────────────┬─────────────────┘
                         │
   ┌─────────────────────▼─────────────────┐
   │  CONTROL UNIT OUTPUTS UTTERANCE t      │── S106
   │  TO FIRST AGENT A TO THIRD AGENT C     │
   └─────────────────────┬─────────────────┘
                         │
   ┌─────────────────────▼─────────────────┐
   │  AGENTS A TO C DERIVE GOODNESS OF FIT  │── S108
   │  WITH RESPECT TO UTTERANCE t           │
   └─────────────────────┬─────────────────┘
                         │
   ┌─────────────────────▼─────────────────┐
   │  SELECTION UNIT SELECTS RESPONSE AGENT │
   │  THAT RESPONDS TO UTTERANCE t BY USING │── S110
   │  GOODNESS OF FIT FROM AGENTS A TO C    │
   └─────────────────────┬─────────────────┘
                         │
   ┌─────────────────────▼─────────────────┐
   │  RESPONSE CONTROL UNIT OUTPUTS RESPONSE│
   │  CONTENT O_{Rt,t} OF RESPONSE AGENT TO DISPLAY │── S112
   │  APPARATUS AS RESPONSE TO UTTERANCE t  │
   └─────────────────────┬─────────────────┘
                         │
   ┌─────────────────────▼─────────────────┐
   │  STORAGE UNIT STORES RESPONSE CONTENT O_{Rt,t} │── S114
   └─────────────────────┬─────────────────┘
```

# FIG. 6

# FIG. 7

# FIG. 8

FIRST AGENT A₂

SECOND AGENT B₂

THIRD AGENT C₂

100
INFORMATION PROCESSING APPARATUS

120
CONTROL UNIT

122
ACQUISITION UNIT

124
SELECTION UNIT

126
RESPONSE CONTROL UNIT

128
STORAGE UNIT

# FIG. 9

A₂

B₂

C₂

FIG. 10

# FIG. 11

FIG. 12

## INTERNATIONAL SEARCH REPORT

| International application No. |
|---|
| PCT/JP2019/047134 |

**A. CLASSIFICATION OF SUBJECT MATTER**

Int.Cl. B25J13/00(2006.01)i, G06F3/16(2006.01)i, G10L15/00(2013.01)i,
G10L15/10(2006.01)i, G10L15/22(2006.01)i
FI: G06F3/16650, G10L15/10500Z, G10L15/22300U, G10L15/00200H, G06F3/16620,
B25J13/00Z

According to International Patent Classification (IPC) or to both national classification and IPC

**B. FIELDS SEARCHED**

Minimum documentation searched (classification system followed by classification symbols)
Int.Cl. B25J13/00, G06F3/16, G10L15/00, G10L15/10, G10L15/22

Documentation searched other than minimum documentation to the extent that such documents are included in the fields searched
Published examined utility model applications of Japan     1922–1996
Published unexamined utility model applications of Japan   1971–2020
Registered utility model specifications of Japan           1996–2020
Published registered utility model applications of Japan   1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2002-132804 A (SANYO ELECTRIC CO., LTD.) 10.05.2002 | 1-6, 10-18 |
| A | (2002-05-10), paragraphs [0011]-[0040], fig. 1-12 | 7-9 |
| X | JP 2004-288018 A (FUJITSU LIMITED) 14.10.2004 | 1-6, 10-18 |
| A | (2004-10-14), paragraphs [0030]-[0093], fig. 3-16 | 7-9 |
| X | JP 2006-268428 A (KENWOOD CORPORATION) 05.10.2006 | 1-6, 10-18 |
| A | (2006-10-05), paragraphs [0094], [0097], fig. 5-7 | 7-9 |
| P, X | JP 6555838 B1 (JE INTERNATIONAL CORPORATION) 07.08.2019 | 1-6, 11-15, |
|  | (2019-08-07), paragraphs [0041]-[0077], fig. 1-7 | 17-18 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12.02.2020 | 03.03.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**EP 3 919 239 A1**

```
JP 2002-132804 A   10.05.2002   US 2002/0049805 A1
                                paragraphs [0078]-[0112], fig. 1-12

JP 2004-288018 A   14.10.2004   US 2003/0189697 A1
                                paragraphs [0048]-[0111], fig. 3-16

JP 2006-268428 A   05.10.2006   (Family: none)

JP 6555838 B1      07.08.2019   (Family: none)
```

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002041276 A
- JP 6176064 A
- JP 2011527798 A